(19) Europäisches Patentamt
European Patent Office
Office européen des brevets

(11) Publication number: 0 382 487 A2

(12) # EUROPEAN PATENT APPLICATION

(21) Application number: 90301249.0

(22) Date of filing: 06.02.90

(51) Int. Cl.5: C08L 67/02, C08K 5/353, C08G 63/21

(30) Priority: 07.02.89 JP 27831/89

(43) Date of publication of application: 16.08.90 Bulletin 90/33

(84) Designated Contracting States: AT BE CH DE DK ES FR GB GR IT LI LU NL SE

(71) Applicant: POLYPLASTICS CO. LTD.
3-13, Azuchicho, 2-chome
Chuo-Ku Osaka-shi Osaka(JP)

(72) Inventor: Nakane, Toshio
885-11, Miyajima
Fuji-shi, Shizuoka(JP)
Inventor: Naka, Michiro
109-2, Mitojima
Fuji-shi, Shizuoka(JP)
Inventor: Kageyama, Yukihiko
815, Gendojicho
Fujinomiya-shi, Shizuoka(JP)
Inventor: Konuma, Hiroaki
371-7, Inouecho, Okitsu
Shimizu-shi, Shizuoka(JP)
Inventor: Hijikata, Kenji
8-8, Fujimidai
Mishima-shi, Shizuoka(JP)

(74) Representative: Jackson, Peter et al
HYDE, HEIDE & O'DONNELL 10-12 Priests Bridge
London SW15 5JE(GB)

(54) ## Polyester resin composition.

(57) A polyester resin composition of improved heat-resistant flexibility comprises:

(A) a polyester copolymer prepared by the polycondensation of a component (a) mainly comprising an aromatic dicarboxylic acid or an ester-forming derivative thereof, with both a component (b) mainly comprising an aliphatic glycol, and a branch-forming component (c),
wherein the component (c) is contained in an amount of 0.001 to 1.0 mole % based on the component (a), and

(B) 0.1 to 10% by weight (based on the total amount of the composition) of a bisoxazoline compound.

EP 0 382 487 A2

## POLYESTER RESIN COMPOSITION

The present invention relates to a heat-resistant polyester resin composition useful as a general industrial material. More particularly, it relates to a polyester resin composition which comprises a polyester copolymer having a branched or crosslinked structure and a bisoxazoline compound and which has excellent heat resistance and does not lose its flexibility even following prolonged or repeated heating (such prolonged or repeated heating being referred to herein as the "thermal history" of the resin).

Polyalkylene terephthalate resins such as polyethylene terephthalate or polybutylene terephthalate have been used hitherto for duties requiring heat resistance. These resins not only have good mechanical and electrical characteristics and heat resistance but also good processability, so that they have been used to advantage in various fields.

Recently, however, higher levels of the characteristics have been sought as the duties required of the resins have become more severe.

Because of the nature of a crystalline resin, the thermal history in service of a polyalkylene terephthalate resin brings about the crystallisation of a non-crystalline part, and the density change resulting therefrom gives rise to internal stresses which cause the cleavage of its molecular chains, so that mechanical properties such as flexibility and impact resistance are considerably reduced. Accordingly, it has hitherto been necessary to avoid the use of such a resin in an environment where a flexible resin is required, for example in an oven, near a heat source or in a location subject to heat build-up, thereby limiting the range of uses of polyalkylene terephthalate resins.

For the purpose of overcoming the above crystallisation problem, an attempt has been made to lower the crystallinity of a polyester resin composition by the addition of an elastomer. While this addition gives some improvement in flexibility and impact resistance it also creates the disadvantage that the composition cannot withstand a long-term thermal history, presumably owing to the crystalline matrix remaining therein, and the further disadvantage that the composition exhibits reduced mechanical characteristics (such as abrasion resistance) owing to its lower content of a crystalline resin.

In view of the above problems, the inventors of the present invention have intensively studied to develop a material which does not lose flexibility even by thermal history and has excellent mechanical and electrical characteristics. They have found that a composition comprising an aromatic polyester copolymer having a branched or crosslinked structure and a specified compound satisfies the above requirements. The present invention has been accomplished on the basis of this finding.

Namely, the present invention relates to a polyester resin composition which comprises:

(A) a polyester copolymer prepared by the polycondensation of:

(a) a component mainly comprising an aromatic dicarboxylic acid or an ester-forming derivative thereof, with

(b) a component mainly comprising an aliphatic glycol, and

(c) a branch-forming component,

wherein the branch-forming component (c) is contained in an amount of 0.001 to 1.0 mole % based on the component (a);

and

(B) 0.1 to 10% by weight (based on the total amount of the composition) of a bisoxazoline compound.

Up to this time, it has been very difficult for a polyester resin composition to have simultaneously the various desired characteristics, for example, abrasion resistance and flexibility (flexing properties and elongation) and an ability to retain the initial high elongation and flexing properties for a prolonged period of time, even in a heated atmosphere, without losing its flexibility. Accordingly, it was unexpected that a composition comprising a polyalkylene terephthalate containing a branched or crosslinked structure incorporated thereinto and a bisoxazoline compound with a specified ratio according to the present invention would not lose flexibility even by thermal history and would display much-improved long-term stability in a heated atmosphere.

The composition of the present invention comprises 90 to 99.9 wt % of the polyester copolymer (A). In this copolymer (A) the component (a) mainly comprises an aromatic dicarboxylic acid or an ester-forming derivative thereof. Representative examples thereof include terephthalic acid and derivatives thereof. If necessary, the component (a) may contain, as an auxiliary component, a dicarboxylic acid such as isophthalic, naphthalenedicarboxylic or tetrabromoterephthalic acid or a derivative thereof; a fatty acid such as adipic, sebacic or succinic acid or an ester-forming derivative thereof; or an aromatic hydroxy carboxylic acid such as hydroxybenzoic or hydroxynaphthoic acid or an ester-forming derivative thereof.

The component (b) of the polyester copolymer (A) mainly comprises an aliphatic diol. Representative

examples thereof include $C_{2-8}$ low-molecular weight glycols such as ethylene glycol, 1,4-butylene glycol, 1,3-propanediol, 1,4-butenediol, 1,6-hexanediol and 1,8-octanediol.

Further, the component (b) may contain, as an auxiliary component, a high-molecular weight glycol, for example, polyalkylene oxide glycol such as polyethylene oxide glycol or polybutylene oxide glycol.

Furthermore, the component (b) may contain, as an auxiliary component, an alkylene oxide adduct of alcohol or an ester-forming derivative thereof. Examples thereof include adducts of bisphenol A with 2 mol of ethylene oxide or propylene oxide, adducts of tetrabromobisphenol A with 2 mol of ethylene oxide or propylene oxide, adducts of tetrabromobisphenol sulfone with 2 mol of ethylene oxide or propylene oxide and adduct of tetrabromohydroquinone with 2 mol of ethylene oxide.

The branch-forming component (c) of the polyester copolymer (A) is one or more compounds each having at least three functional groups in its molecule, each group being selected from among carboxyl and hydroxyl groups and ester-forming derivative groups thereof. The three or more functional groups may be the same as or different from each other.

Examples of component (c) compounds having groups selected from carboxyl group and derivative groups thereof include trimesic, trimellitic, pyromellitic, mellitic, butanetricarboxylic and butenetricarboxylic acids and alkyl esters thereof; acid anhydrides such as trimellitic anhydride; glycerol, trimethylolpropane, trimethylolhexane, pentaerythritol, dipentaerythritol, 1,3,5-trimethylolbenzene, 1,3,5-triethylolbenzene and 2,2,6,6-tetramethylolcyclohexanol and esters thereof with lower carboxylic acids; and hydroxy carboxylic acid such as 5-hydroxyisophthalic acid and derivatives thereof.

Among them, trialkyl trimesates, trialkyl trimellitates, tetraalkyl pyromellitates and pentaerythriol are preferred.

According to the present invention, a branched structure is introduced into a polyester to a suitable degree by using a specified amount of a branch-forming component (c) as described above as the constituent to be copolymerized.

When a branched structure is introduced into a polyester to an unduly high degree, the resulting polymer becomes brittle owing to the three-dimensional network formed therein to result in gelation. In contrast, if it is introduced in such a degree as given by the addition of a specified amount of the component (c) according to the present invention, the resulting polymer has excellent flexibility in spite of the presence of a branched structure and can retain the strength and flexibility inherent in a resin by virtue of a synergistic effect of the interlocking of the branched part and the presence of the component (B), even if some chain cleavage occurs by long-term thermal history.

According to the present invention, the branch-forming compound (c) is copolymerized in such an amount that the content thereof is 0.001 to 1.0 mole %, preferably 0.01 to 0.4 mole %, based on the component (a). If the content of the component (c) is less than 0.001 mole %, the flexibility will not be sufficiently retained after thermal history, while if it exceeds 1.0 mole %, the resulting polyester will exhibit too high a melt viscosity or will be insoluble or infusible owing to the three-dimensional structure formed, thus resulting in poor processability.

The copolymer to be used in the present invention may be prepared by a conventional process such as melt polymerization, interfacial polymerization or solid phase polymerization and may have an intrinsic viscosity of about 0.5 to 3.0, preferably at least 0.8, most preferably at least 1.0.

The bisoxazoline compound (B) to be used in the present invention is one represented by the following general formula (1):

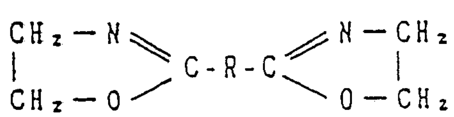

(1)

wherein R is a divalent organic group and the hydrogen atoms may be each replaced by an alkyl or aryl group.

Examples of the bisoxazoline compound (B) represented by the general formula (1) include
2,2′-methylenebis(2-oxazoline),
2,2′-ethylenebis(2-oxazoline),
2,2′-ethylenebis(4-methyl-2-oxazoline),
2,2′-propylenebis(2-oxazoline),
2,2′-tetramethylenebis(2-oxazoline),
2,2′-hexamethylenebis(2-oxazoline),

2,2'-octamethylenebis(2-oxazoline),
2,2'-p-phenylenebis(2-oxazoline),
2,2'-p-phenylenebis(4-methyl-2-oxazoline),
2,2'-p-phenylenebis(4,4-dimethyl-2-oxazoline),
2,2'-p-phenylenebis(4-phenyl-2-oxazoline),
2,2'-m-phenylenebis(2-oxazoline),
2,2'-m-phenylenebis(4-methyl-2-oxazoline),
2,2'-m-phenylenebis(4,4-dimethyl-2-oxazoline),
2,2'-m-phenylenebis(4-phenyl-2-oxazoline),
2,2'-o-phenylenebis(2-oxazoline),
2,2'-phenylenebis(4-methyl-2-oxazoline),
2,2'-bis(-2-oxazoline),
2,2'-bis(4-methyl-2-oxazoline,
2,2'-bis(4-ethyl-2-oxazoline)
and
2,2'-bis(4-phenyl-2-oxazoline).
These bisoxazoline compounds may be used alone or as a mixture of two or more of them.

Among the above bisoxazoline compounds, it is preferable to use a compound represented by the general formula(1) wherein R is an aromatic ring group, still preferably a phenylene group. Particularly preferred are
2,2'-m-phenylenebis(2-oxazoline) and
2,2'-p-phenylenebis(2-oxazoline).

The amount of the bisoxazoline compound (B) to be added is 0.1 to 10% by weight, preferably 0.1 to 5% by weight based on the total amount of the composition. If the amount is too small, the effect will not be exhibited, while if it is too large, various problems such as rapid viscosity increase and increase in the amount of decomposition products will occur.

According to the present invention, the amount of the compound (B) to be used is limited as described above, so that the resulting composition is remarkably improved in retention of flexibility under heating, without increasing the intrinsic viscosity, i.e. lowering the flowability in molding.

The bisoxazoline compound (B) may be added either in the step of preparation of the aromatic copolyester or in the step of pelletization.

The resin composition of the present invention may arbitrarily contain a small amount of another thermoplastic resin as far as the object of the present invention is not hindered. The thermoplastic resin to be arbitrarily used may be any one which is stable at high temperature. Examples thereof include polyesters other than the component(A) , polyamide, polycarbonate, ABS, polyphenylene oxide, polyalkyl acrylate, polyacetal, polysulfone, polyether sulfone, polyether imide, polyether ketone and fluororesins. These other thermoplastic resins may be also used alone or as a mixture of two or more of them.

Although the resin composition of the present invention exhibits excellent properties, even if it does not contain any additive, it may contain additives for the purpose of further improving its properties. Examples of the additives include stabilizers such as antioxidant and ultraviolet absorbers, antistatic agents, flame retardants, auxiliary flame retardants, colouring agents such as dyes and pigments, lubricating agents for improving the flowability and mold release properties, lubricants, crystallisation accelerators (nucleating agents) and inorganic materials. Particularly, the addition of an antioxidant is beneficial in giving further improved heat stability.

Suitable stabilizers include hindered phenols, amines and phosphorus compounds.

Examples of the hindered phenol stabilizer include
2,2'-methylenebis(4-methyl-6-t-butylphenol),
hexamethylene glycol bis(3,5-di-t-butyl-4-hydroxyhydrocinnamate),
tetrakis[methylene(3,5-di-t-butyl-4-hydroxyhydrocinnamate)]methane,
triethylene glycol bis-3-(3-t-butyl-4-hydroxy-5-methylphenyl)propionate,
1,3,5-trimethyl-2,4,6-tris(3,5-di-t-butyl-4-hydroxybenzyl)benzene,
n-octadecyl 3-(4'-hydroxy-3',5'-di-t-butylphenol)propionate,
4,4'-methylenebis(2,6-di-t-butylphenol),
4,4'-butylidenebis(6-t-butyl-3-methylphenol),
2,2'-thiodiethylbis[3-(3,5-di-t-butyl-4-hydroxyphenyl)]propionate,
distearyl 3,5-di-t-butyl-4-hydroxybenzylphosphonate
and
2-t-butyl-6-(3-t-butyl-5-methyl-2-hydroxybenzyl)-4-methylphenyl acrylate.

These compounds may be used alone or as a mixture of two or more of them. Particularly preferred among them are:
hexamethylene glycol bis(3,5-di-t-butyl-4-hydroxyhydrocinnamate),
tetrakis[methylene(3,5-di-t-butyl-4-hydroxyhydrocinnamate)]methane, and
triethylene glycol bis-3-(3-t-butyl-4-hydroxy-5-methylphenyl)propionate.

Examples of the amine stabilizer include
N-phenyl-N′-isopropyl-p-phenylenediamine,
N,N′-diphenyl-p-phenylenediamine,
4,4′-bis(4-a,a-dimethylbenzyl)diphenylamine, condensate of diphenylamine with acetone, N-phenylnaphthylamine and N,N′-di-β-naphthylphenylenediamine.

Examples of the phosphorus stabilizer include phosphonite compounds represented by the following general formula (2):

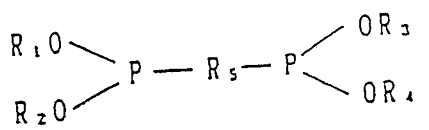

(2)

wherein $R_1$, $R_2$, $R_3$ and $R_4$ may be the same or different from each other and are each a $C_{1-25}$ alkyl, substituted alkyl, aryl or substituted aryl group. Particular examples thereof include methyl, ethyl, butyl, octyl, decyl, lauryl, tridecyl, stearyl, phenyl and alkyl-and/or alkoxy-substituted phenyl groups; $R_5$ is a $C_{4-33}$ alkylene, substituted alkylene, arylene or substituted arylene group and particular examples thereof include butylene, octylene, phenylene, naphthylene and diphenylene groups and groups represented by the general formula:

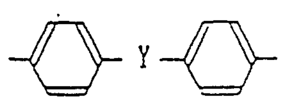

(wherein Y is an oxy, sulfonyl, carbonyl, methylene, ethylidene, butylidene, isopropylene or diazo group). Particularly, tetrakis(2,4-di-t-butylphenyl) 4,4′-diphenylenephosphonite is preferred.

The stabilizer is used in an amount of 0 to 5% by weight, preferably 0.1 to 3 % by weight, based on the total amount of the composition.

Compounds to be used as required as the flame retardant include halogenated compounds such as brominated polycarbonates, brominated epoxy compounds, brominated diphenyl and brominated diphenyl ether.

Compounds to be used as required as the auxiliary flame retardant include antimony compounds such as antimony trioxide and antimony halides; metal compounds such as zinc or bismuth compounds; magnesium hydroxide and clay-like silicates such as asbestos.

Suitable inorganic materials include ordinary inorganic fibers such as glass fiber, carbon fiber, ceramic fiber, boron fiber, potassium titanate fiber and asbestos; powdery, granular or flaky inorganic materials such as calcium carbonate, highly dispersible silicate, alumina, aluminium hydroxide, talc, clay, mica, glass flake, glass powder, glass bead, quartz powder, quartz sand, wollastonite, carbon black, barium sulfate, plaster of Paris, silicon carbide, alumina, boron nitride and silicon nitride, and whiskers.

These inorganic fillers may be used alone or as a mixture of two or more of them.

The polyester resin composition of the present invention is superior to polyester resins and compositions thereof according to the prior art in heat resistance, electrical and mechanical properties and so on, thus being useful as industrial material. Particularly, compared with resin compositions according to the prior art the composition of the present invention exhibits much reduced deterioration of physical properties even after thermal history. Specifically:

(1) the composition exhibits reduced deterioration of physical properties, particularly flexibility even after thermal history, so that it is useful as a material for devices or components to be used around a heat source, a vehicle engine or a heating element of an electrical appliance,
and

(2) the composition is not only improved in flexing properties, but also retains excellent mechanical and electrical properties. Therefore, it is useful as a coating material for electrically-conducting wire to be

used in applications where information must be conveyed through areas of limited volume subjected to elevated temperatures, for example in vehicles such as space rockets, airplanes or automobiles, and in electric appliances, computer or information-related machines, thereby dramatically enhancing the utilization of the limited volume.

Examples

The present invention will now be described by referring to the following Examples, though it is not limited to them.

Preparation of polyester copolymer (A)

Preparation Example 1.

100 parts by weight of dimethyl terephthalate (DMT), 90 parts by weight of 1,4-butanediol (BD) and 0.0026 parts by weight of trimethyl trimesate were fed into a reactor fitted with a stirrer, a nitrogen inlet tube or an outlet for distillate, followed by the addition of a predetermined amount of a catalyst. The contents were stirred in a stream of nitrogen at 180 °C for 30 minutes and distilled to remove generated methanol. After stopping the introduction of nitrogen, the reactor was gradually evacuated while gradually raising the temperature of the contents. Finally, the contents were kept at 240 °C in a vacuum of 13.3Pa (0.1 mmHg) for 2.5 hours to complete the polymerization.

The obtained branched polymer (A-1) had an intrinsic viscosity of 0.92 (under the conditions of the measurement which will be described below).

Preparation Example 2

The same procedure as that described in Preparation Example 1 was repeated except that the amount of the trimethyl trimesate used as the component (c) was 0.026 parts by weight. Thus, a branched polymer (A-2) having an intrinsic viscosity of 1.19 was obtained.

Preparation Example 3

The same procedure as that of Preparation Example 1 was repeated except that 0.0026 parts by weight of trimethyl trimellitate were used as the component (c) instead of the trimethyl trimesate to obtain a branched polymer (A-3) having an intrinsic viscosity of 0.99.

Preparation Example 4

The same procedure as that of Preparation Example 3 was repeated except that the amount of the trimethyl trimellitate used was 0.026 parts by weight to obtain a branched polymer (A-4) having an intrinsic viscosity of 1.05.

Preparation Example 5

100 parts by weight of DMT, 85 parts by weight of BD, 17.6 parts by weight of an adduct of tetrabromobisphenol A with 2 mol of ethylene oxide and 0.026 parts by weight of trimethyl trimellitate were copolymerized under the same conditions as those of Preparation Example 1.

Thus a brominated branched polymer (A-5) having an intrinsic viscosity of 0.89 was obtained.

Comparative Preparation Example 1

The same procedure as that described in Preparation Example 1 was repeated except that no branch-forming compound (c) such as trimethyltrimesate was used. The obtained polybutylene terephthalate polymer (PBT) was unbranched and had an intrinsic viscosity of 0.88.

Example 1

1,3-Phenylenebisoxazoline (mPBO) was added to the polymer (A-1) prepared in Preparation Example 1 in an mount of 0.5% by weight based on the polymer. The obtained mixture was melt-kneaded and pelletized with an extruder.

The obtained pellets were examined for intrinsic viscosity according to an ordinary method by the use of o-chlorophenol as a solvent at 35 °C. Separately, the pellets were injection-molded into a test piece by an ordinary method and the physical properties of the test piece were evaluated.

The physical properties were determined by the methods described below.

The tensile strength and elongation (%) were determined according to ASTM D 638. The impact test was carried out according to ASTM D 256. The long-term heat resistance was evaluated by storing a sample piece for tensile test in a thermostatic chamber of 120 °C for 500 hours and determining the strength, elongation and impact resistance of the resulting sample piece in a similar manner to that described above. The results are shown in Table 1. The tensile strength results are given in $kg/cm^2$ (1 $kg/cm^2$ = 0.0981 MPa).

Examples 2 to 9

The polymers (A-1) to (A-5) prepared in Preparation Examples 1 to 5 were each melt-kneaded together with 1,3-phenylenebis(2-oxazoline) (mPBO) or 1,4-phenylenebis(2-oxazoline) (pPBO) in a ratio given in Table 1. The obtained composition was pelletized and evaluated in a similar manner to that described in Example 1. The results are shown in Table 1.

Comparative Example 1

The unbranched polymer (PBT) prepared in Comparative Preparation Example 1 was melt-kneaded together with 1% by weight of mPBO and pelletized with an extruder. The obtained pellets were evaluated in a similar manner to that described in Example 1. The results are shown in Table 1.

Comparative Examples 2 to 7

The polymers prepared in Preparation Examples 1 to 5 and Comparative Preparation Example 1 were each melt-extruded into pellets without adding any bisoxazoline compound as the component (B). The pellets thus prepared were evaluated in a similar manner to that described in Example 1. The results are shown in Table 1.

Table 1

| | Example No. | | | | | | | | |
|---|---|---|---|---|---|---|---|---|---|
| | 1 | 2 | 3 | 4 | 5 | 6 | 7 | 8 | 9 |
| Base polymer | A−1 | A−1 | A−1 | A−1 | A−2 | A−2 | A−3 | A−4 | A−5 |
| Intrinsic viscosity of base polymer | 0.92 | 0.92 | 0.92 | 0.92 | 1.19 | 1.19 | 0.99 | 1.05 | 0.89 |
| Bisoxazoline (% by weight) | mPBO (0.5) | mPBO (1.0) | mPBO (3.0) | pPBO (1.0) | mPBO (1.0) | pPBO (1.0) | mPBO (1.0) | mPBO (1.0) | mPBO (1.0) |
| Intrisic viscosity after addition of bisoxazoline | 0.95 | 0.97 | 0.97 | 0.97 | 1.22 | 1.23 | 1.02 | 1.07 | 0.94 |
| Tensile strength ($kg/cm^2$) | 578 | 590 | 572 | 586 | 618 | 604 | 598 | 606 | 559 |
| Tensile elongation (%) | >300 (not broken) | >300 (not broken) | >300 (not broken) | >300 (not broken) | >300 (not broken) | >300 (not broken) | >300 (not broken) | >300 (not broken) | >300 (not broken) |
| Izod impact strength (notched, notched side) | 3.5 | 3.6 | 3.5 | 3.6 | 3.7 | 3.6 | 3.5 | 3.6 | 3.4 |
| After 500 hours at 120°C | | | | | | | | | |
| Tensile strength ($kg/cm^2$) | 588 | 596 | 586 | 595 | 622 | 610 | 585 | 580 | 581 |
| Tensile elongation (%) | 200 | >300 (not broken) | 290 | >300 (not broken) | >300 (not broken) | >300 (not broken) | >300 (not broken) | >300 (not broken) | >300 (not broken) |
| Izod impact strength (notched, notched side) | 3.6 | 3.5 | 3.4 | 3.5 | 3.4 | 3.5 | 3.5 | 3.4 | 3.4 |

Table 1 (continued)

| | Comparative Example No. | | | | | | |
|---|---|---|---|---|---|---|---|
| | 1 | 2 | 3 | 4 | 5 | 6 | 7 |
| Base polymer | PBT | A−1 | A−2 | A−3 | A−4 | A−5 | PBT |
| Intrinsic viscosity of base polymer | 0.88 | 0.92 | 1.19 | 0.99 | 1.05 | 0.89 | 0.88 |
| Bisoxazoline (% by weight) | mPBO (1.0) | — | — | — | — | — | — |
| Intrinsic viscosity after addition of bisoxazoline | 0.95 | — | — | — | — | — | — |
| Tensile strength ($kg/cm^2$) | 525 | 588 | 603 | 576 | 565 | 550 | 570 |
| Tensile elongation (%) | >300 (not broken) | > 300 (not broken) | >300 (not broken) | >300 (not broken) | >300 (not broken) | > 300 (not broken) | >300 (not broken) |
| Izod impact strength (notched, notched side) | 3.4 | 3.3 | 3.5 | 3.3 | 3.4 | 3.3 | 3.3 |
| After 500 hours at 120°C | | | | | | | |
| Tensile strength ($kg/cm^2$) | 539 | 594 | 610 | 588 | 582 | 558 | 590 |
| Tensile elongation (%) | 210 | 135 | 120 | 148 | 135 | 89 | 55 |
| Izod impact strength (notched, notched side) | 1.6 | 1.4 | 1.5 | 1.4 | 1.4 | 1.3 | 1.3 |

## Claims

1. A polyester resin composition which comprises:

(A) a polyester copolymer prepared by the polycondensation of:

(a) a component mainly comprising an aromatic dicarboxylic acid or an ester-forming derivative thereof, with

(b) a component mainly comprising an aliphatic glycol, and

(c) a branch-forming component,

wherein the branch-forming component (c) is contained in an amount of 0.001 to 1.0 mole % based on the component (a);

and

(B) 0.1 to 10% by weight (based on the total amount of the composition) of a bisoxazoline compound.

2. A resin composition as set forth in claim 1, wherein the aliphatic glycol of component (b) is one or more members selected from among $C_{2-8}$ low-molecular weight glycols.

3. A resin composition as set forth in claim 2, wherein the $C_{2-8}$ low-molecular weight glycol is one or more members selected from among ethylene glycol, 1,4-butylene glycol and 1,4-butene glycol.

4. A resin composition as set forth in any preceding claim, wherein the component (b) further contains one or more members selected from a high molecular weight glycol and an alkylene oxide adduct of alcohol or an ester-forming derivative thereof.

5. A resin composition as set forth in any preceding claim, wherein the branch-forming component (c) is one or more compounds each having at least three functional groups in its molecule, each group being selected from among carboxyl and hydroxyl groups and ester-forming derivative groups thereof.

6. A resin composition as set forth in claim 5, wherein the branch-forming component (c) is one or more compounds selected from among trimesic acid and ester-forming derivatives thereof, trimellitic acid and ester-forming derivatives thereof and pyromellitic acid and ester-forming derivatives thereof.

7. A resin composition as set forth in any preceding claim, wherein the amount of the branch-forming component (c) is 0.01 to 0.4 mole %, based on the component (a).

8. A resin composition as set forth in any preceding claim, wherein the bisoxazoline compound (B) is represented by the general formula (1):

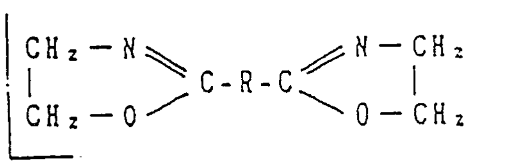

(1)

wherein R is a divalent organic group and the hydrogen atoms may be each replaced by an alkyl or aryl group.

9. A resin composition as set forth in any preceding claim, wherein the bisoxazoline compound (B) is m-phenylenebisoxazoline or p-phenylene bisoxazoline.

10. A resin composition as set forth in any preceding claim, wherein the amount of the bisoxazoline compound (B) is 0.1 to 10% by weight, based on the total amount of the composition.